# EUROPÄISCHE PATENTSCHRIFT

(11) **EP 3 669 637 B1**
(45) Veröffentlichungstag und Bekanntmachung des Hinweises auf die Patenterteilung: **24.08.2022**
(21) Anmeldenummer: 19000561.1
(22) Anmeldetag: 16.12.2019
(51) Int. Cl.: A01D 89/00

(54) **LANDWIRTSCHAFTLICHE ERNTEMASCHINE MIT FÖRDERTROMMEL**
AGRICULTURAL HARVESTER WITH CONVEYOR DRUM
ENGIN D'ABATTAGE-FAÇONNAGE AGRICOLE POURVU DE TAMBOUR DE TRANSPORT

(30) Priorität: 21.12.2018 DE 102018010093
(43) Veröffentlichungstag der Anmeldung: 24.06.2020
(73) Patentinhaber: Maschinenfabrik Bernard Krone GmbH & Co. KG, 48480 Spelle (DE)
(72) Erfinder: Ester, Markus, 49832 Beesten (DE)

(56) Entgegenhaltungen:
- EP-A1- 3 028 559
- DE-A1-102007 015 101
- US-A1- 2014 223 876

## Beschreibung

Die Erfindung betrifft eine landwirtschaftliche Erntemaschine nach dem Oberbegriff des Patentanspruchs 1, mit einer Fördertrommel mit Förderzinken zur Förderung und/oder Aufnahme von Halm- und Blattgut. Es kann sich z.B. um einen Ladewagen, eine Ballenpresse, einen Feldhäcksler oder um einen Schwader mit Schwadleger (Merger) handeln.

Eine Kombination aus einem zylinderförmigen Trommelgrundkörper und einer Vielzahl daran befestigter Förderzinken bildet eine Fördertrommel. Zur Aufnahme und zur Förderung von Halm- und Blattgut wird die Fördertrommel angetrieben, sodass die Fördertrommel rotiert. Die mitrotierenden Förderzinken nehmen das Erntegut vom Boden auf und/oder fördern es in einem Förderkanal. Aus verschiedenen Gründen müssen diese Förderzinken gelegentlich ausgetauscht werden. Ein möglicher Grund ist, dass die Förderzinken verschlissen sind. Ein weiterer Grund für den Austausch von Förderzinken ist, dass die Förderzinken durch die Aufnahme von Fremdkörpern abgebrochen oder beschädigt sind. In so einem Fall können unmittelbar mehrere Förderzinken gleichzeitig beschädigt bzw. abgebrochen sein und müssen somit umgehend ausgetauscht werden.

Der Stand der Technik schlägt verschiedene Lösungen für den Austausch von Förderzinken vor. Dabei fallen zwei Lösungsansätze besonders in den Fokus. Aus EP 3 028 559 A1 ist eine Aufnahmevorrichtung mit einer Fördertrommel und daran angebrachten Förderzinken bekannt. Es befinden sich zwei Förderzinken an einem Segment, welches mit einer Schraube an dem Trommelgrundkörper befestigt wird. Wenn Förderzinken beschädigt sind, kann durch das Lösen einer Schraube ein Förderzinkenpaar umgehend ausgetauscht werden. Jedoch sind die Schrauben teilweise übermäßig verdreckt, sodass diese erst aufwändig gesäubert werden müssen, bevor sie gelöst werden können. Außerdem nachteilig ist dabei, dass der gleichzeitige Austausch mehrerer Förderzinken sehr aufwändig ist, da für jedes Förderzinkenpaar eine Schraube gelöst werden muss. Fördertrommeln verfügen in der Regel über eine große Anzahl von Förderzinken(-paaren). Daher ergibt sich auch ein großer Instandsetzungsaufwand.

Ebenfalls von Nachteil ist, dass sich die Schrauben aufgrund der dynamischen Belastung lösen können. Da die Förderzinken einer Fördertrommel teilweise stark beansprucht werden, ist das selbsttätige Lösen der Schrauben nicht auszuschließen. Dies entsteht dadurch, dass die Vorspannkraft durch die Belastung der Schraube nachlässt. Die gelösten Schrauben und Förderzinken können weitere Förderzinken beschädigen, was zu langen Stillstandzeiten und großen Materialschäden führen würde. Des Weiteren können Schraubenteile und Zinkenteile in das Erntegut gelangen. Dies gilt es zu verhindern, da es sich bei dem Erntegut in den meisten Fällen um Tierfutter handelt. Verunreinigtes Tierfutter stellt eine Gefahr für die Tiere dar.

Des Weiteren nachtteilig sind die aufwändige und sehr kostenintensive Fertigung der Fördertrommel und der Förderzinken. Der Trommelmantel muss pro Förderzinkenpaar eine Aufnahmetasche für den Sockel und eine Bohrung mit Gewinde für die Befestigungsschraube aufweisen. Die Bauweise des Förderzinkenpaars weist ebenfalls eine komplizierte und kostenintensive Herstellung auf.

DE 20 2016 104 504 U1 zeigt eine Befestigung der Förderzinken in der Form eines Förderzinkenrings. Eine Aneinanderreihung von mehreren Förderzinken wird zu einem Förderzinkenring gebildet. Hier werden für die Bildung eines Förderzinkenrings sechs Förderzinken zwölf Schrauben und sechs Zwischenstücke benötigt. Das sind viele Einzelteile und somit ist der Zeitaufwand für den Zusammenbau des Förderzinkenrings und zum Austausch der Förderzinken groß. Auch hier ist der große Nachteil, dass der gleichzeitige Austausch mehrerer Förderzinken sehr zeitintensiv ist.

Die Druckschrift DE 10 2007 015 101 A1 offenbart einen Gutaufnehmer mit einem Aufnehmerotor mit mehreren um ihre Längsachse drehbar abgestützten Zinkenträgern mit daran befestigten Zinken. Die Zinkenträger sind mittels einer Antriebswelle entlang einer Kreisbahn bewegbar. Sie sind zudem zwischen zwei Endstellungen um ihre Längsachse schwenkbar gelagert. Die Zinken weisen einen spiralförmigen Abschnitt auf, der durch Schrauben mit den Zinkenträgern verbunden ist.

Die vorliegende Erfindung hat sich die Aufgabe gestellt eine neuartige Fördertrommel für Landmaschinen zum Aufnehmen und/oder Fördern von Erntegut anzubieten, die eine Wartung und/oder Reparatur der Fördertrommel vereinfacht und beschleunigt. Diese erfindungsgemäße Aufgabe wird durch eine Erntemaschine gemäß den Merkmalen des Patentanspruchs 1 gelöst, wobei vorteilhafte Weiterbildungen aus den weiteren Patentansprüchen und den Ausführungsbeispielen hervorgehen.

Es ist auch vorstellbar, dass zum Verriegeln der Förderzinken innerhalb des Trommelgrundkörpers eine Betätigung von der linken und der rechten Trommelseite möglich ist. Dabei kann es vorgesehen sein, dass zumindest ein Teil der Förderzinken durch eine Verriegelungseinrichtung von der linken Trommelseite und der andere Teil der Förderzinken durch eine Verriegelungseinrichtung von der rechten Trommelseite radial an der Innenseite des Trommelgrundkörpers gespannt werden.

Der Trommelgrundkörper kann verschiedene Ausführungsformen aufweisen. In einer Ausführungsform bilden zwei Ringe, verbunden mit mehreren Streben auf der Querschnittsfläche der Ringe einen zylinderförmigen Körper. Die Streben sind gleichmäßig seitlich beabstandet und mit den Querschnittsflächen der Ringe verbunden, sodass Aufnahmemittel für die Förderzinken entstehen. Die Förderzinken werden mit ihren Sockeln zwischen den Streben eingeführt und somit mit diesen verbunden. Nach der Montage der Förderzinken wird durch die Sockel der Förderzinken ein nach außen geschlossener Trommelmantel gebildet.

In einer vorteilhaften Ausführungsform des Trommelgrundkörpers wird ein hohler geschlossener zylinderförmiger Körper bereitgestellt. Auf seiner Mantelfläche sind seitlich beabstandete, als Aufnahmefenster gestaltete, Aufnahmemittel. Dort werden die Förderzinken an ihren Sockeln mit dem Trommelgrundkörper verbunden. Die Aufnahmefenster an dem Trommelgrundkörper und die Sockel der Förderzinken sind so gestaltet, dass eine formschlüssige Verbindung entsteht. So werden die Förderzinken am Trommelgrundkörper in deren Lage gesichert. Ein unkontrolliertes Herausfallen der Förderzinken wird hierdurch verhindert.

Durch eine zentrale Arretierung wird sichergestellt, dass die Förderzinken gleichzeitig gelöst und gespannt werden können. Bei der zentralen Arretierung befindet sich in dem Trommelgrundkörper eine Welle als zentrale Achse. Auf der Welle sind Exzenterscheiben angebracht. Die Exzenterscheiben auf der Welle weisen zueinander den gleichen Abstand auf, wie die seitlich zueinander beabstandeten Aufnahmefenster, mit den darin enthaltenden Förderzinken. Durch das Drehen der Welle entsteht ein Kontakt zwischen den Exzenterscheiben und den Sockeln der Förderzinken. Die Sockel werden mit der Außenseite der Exzenterscheiben gespannt, d.h. die Sockel der Förderzinken werden von der Exzenterscheibe gegen die, als Aufnahmefenster ausgeführten, Aufnahmemittel des Trommelgrundkörpers gedrückt. So entsteht eine reibschlüssige Verbindung zwischen dem Sockelteil und dem Exzenter. Um die Exzenterscheiben von der "gespannten Position" in die "gelöste Position" oder auch umgekehrt zu versetzen, muss die Welle, an der die Exzenterscheiben befestigt sind, in die entsprechende Richtung gedreht werden. Dies kann durch einen Werkzeugschlüssel geschehen.

Alternativ besteht auch die Möglichkeit einen durchgehenden Rotor zu verwenden, der die Funktion der Exzenterscheiben übernimmt. Der Rotor kann aus Vollmaterial bestehen oder aus einer hohlen Welle. Die hohle Welle hat den Vorteil des geringeren Gewichts. Auf dem Mantel der Welle sind passende Keile angebracht. Durch das Drehen der Welle entstehen der Kontakt zwischen den Keilen und der Sockel der Förderzinken. So werden die Sockel gegen die Aufnahmemittel in der Innenseite des Trommelgrundkörpers gedrückt und die Förderzinken sind gespannt. Das eigenständige Entriegeln wird verhindert. Es werden Verdreh-/ oder Entriegelungssicherungen verwendet, die üblicherweise in der mechanischen Technik als Sicherungsmittel bekannt sind.

Die Förderzinken können zueinander so versetzt angeordnet sein, dass sie quer zur Fahrtrichtung zumindest bereichsweise eine wendeiförmige Anordnung am Trommelgrundkörper ausbilden. Diese Art der Anordnung steht für einen kontinuierlichen Futterfluss und eine gleichmäßige Beschickung des Schneid- und Förderaggregates über die komplette Breite. Das Resultat ist mehr Leistung und eine bessere Ausladung.

Die Förderzinken können am Trommelgrundkörper auch quer zur Fahrtrichtung in einer linearen Reihe ausgerichtet sein. Diese Art der Anordnung steht für einen schwungartigen Futterfluss. Hierbei ist der Konstruktionsaufwand der Fördertrommel geringer als bei der wendelförmigen Anordnung der Förderzinken am Trommelgrundkörper.

Der Förderzinken ist in zwei Teile aufgeteilt, und zwar in Sockel und Mitnehmerelement. Das Mitnehmerelement besteht aus einem Draht bzw. aus einem Rundstahl. Alternativ kann es auch aus elastischem Material bestehen, um so beim Aufnehmen von Erntegut, Fremdkörpern partiell auszuweichen. Der Sockel kann ebenfalls aus elastischem Material bestehen. Dadurch hätte das Mitnehmerelement Bewegung im Sockel und könnte so ebenfalls Fremdkörpern ausweichen, auch wenn das Mitnehmerelement aus starrem Material besteht. Der Förderzinken (Sockel mit Mitnehmerelement) kann auch aus einem Material bestehen. In dem Fall sollte der Förderzinken aus elastischem Material bestehen. Wenn das Mitnehmerelement aus elastischem Material, wie einem Kunststoff besteht, kann beim Aufnehmen von Erntegut Fremdkörpern partiell ausgewichen werden. Alternativ kann das Mitnehmerelement des Förderzinkens einen ungleichmäßigen Querschnitt nach außen (oben) zur Spitze verjüngend aufweisen. Hier sind quadratförmige oder dreieckförmige Querschnitte denkbar.

Der Sockel des Förderzinkens ist so gestaltet, dass eine formschlüssige Verbindung mit dem Trommelgrundkörper herstellbar ist. In einer bevorzugten Variante weist der Sockel einen oberen Sockelteil und einen unteren Sockelteil auf, wobei der obere Sockelteil von dem Trommelgrundkörper gestützt wird und der untere Sockelteil in ein Aufnahmemittel einsetzbar ist. Die Öffnung der Aufnahmemittel darf nicht enger sein als der untere Sockelteil. Der obere Sockelteil ist in der Breite und Länge so gewählt, dass er vom Trommelgrundkörper gestützt wird. So wird sichergestellt, dass eine formschlüssige Verbindung entsteht.

Der obere Sockelteil des Förderzinkens ist so geformt, dass die Öffnungen der Aufnahmemittel am Trommelgrundkörper zumindest in etwa abgedeckt werden. Je nach Form des Trommelgrundkörpers ist der obere Sockelteil dementsprechend angepasst. Die Anlagefläche des oberen Sockelteils, also die Fläche, die außerhalb des Trommelgrundkörpers berührt wird, bildet den gleichen Radius aus, wie der des Trommelgrundkörpers. So ist sichergestellt, dass der obere Sockelteil am Trommelgrundkörper schlüssig anliegt. Nach der Montage der Förderzinken an dem Trommelgrundkörper wird nach außen ein geschlossener Trommelmantel gebildet. Dadurch wird verhindert, dass Erntematerial in den Trommelgrundkörper gelangt und diesen verschmutzt. Es wird ebenfalls verhindert, dass sich Erntegutablagerungen bilden.

Ein nach außen geschlossener Trommelmantel wird gebildet nachdem die Förderzinken an dem Trommelgrundkörper montiert sind. In einer Ausführungsform sind die Sockel der Förderzinken so geformt, dass diese sich gegenseitig stützen, sich in der Lage sichern und somit den Trommelmantel bilden.

Wie bereits oben erwähnt weist der Sockel des Förderzinkens einen oberen Sockelteil und einen unteren Sockelteil auf, wobei der obere Sockelteil von dem Trommelgrundkörper gestützt wird und der untere Sockelteil in ein Aufnahmemittel einsetzbar ist. Der untere Sockelteil des Förderzinkens ist so gestaltet, dass dieser sich durch die Aufnahmemittel des Trommelgrundkörpers erstreckt und im Innern des Trommelgrundkörpers eine Anlagefläche bildet. Der untere Sockelteil weist eine kurze Stegseite und eine lange Stegseite auf. Die Seite mit dem langen Steg wird als erstes in ein Aufnahmemittel eingeführt und hinterher die Seite mit dem kurzen Steg. Die kurze Stegseite wird dann im Aufnahmemittel angelegt. Durch eine formschlüssige Verbindung zwischen Sockel und Aufnahmemittel wird sichergestellt, dass die Förderzinken nicht herausfallen. Sobald die Förderzinken angelegt sind, können die Förderzinken durch die zentrale Verriegelungseinrichtung arretiert werden.

Die Arretierung der Förderzinken erfolgt durch eine Kontaktaufnahme der Anlagefläche des unteren Sockelteils und einer Verriegelungseinrichtung innerhalb des Trommelgrundkörpers. Die Verriegelungseinrichtung weist eine Welle auf, auf der Exzenter aufgeschweißt sind, welche dazu eingerichtet sind, durch eine radiale Drehbewegung den unteren Sockelteil eines Förderzinkens gegen die Aufnahmemittel des Trommelgrundkörpers zu drücken.

Die zentrale Verriegelungseinrichtung weist eine weitere Sicherung auf, sodass beim Lösen der Verriegelungseinrichtung die Förderzinken am Trommelgrundkörper in deren Lage gesichert sind und nicht durch ihr/e Eigengewicht/Schwerkraft unkontrolliert aus den Aufnahmemitteln rausfallen. Zunächst werden die Förderzinken dadurch gesichert, dass die Sockel der Förderzinken und die Aufnahmemittel eine formschlüssige Verbindung bilden.

Eine weitere Möglichkeit besteht darin die Sockel der Förderzinken so zu gestalten, dass die Förderzinken durch ihr/e Eigengewicht/Schwerkraft nicht aus den Aufnahmemitteln rausfallen können. Der untere Sockelteil besteht wie oben beschrieben aus einer langen Stegseite und einer kurzen Stegseite. Die Seite mit dem langen Steg wird als erstes in ein Aufnahmemittel eingeführt und hinterher die Seite mit dem kurzen Steg. Die kurze Stegseite wird dann im Aufnahmemittel angelegt. Da die kurze Stegseite angelegt wird, ist sie so gestaltet, dass sie in den Aufnahmemitteln zwischen Trommelgrundkörper und dem oberen Sockelteil geklemmt wird. Der Abstand zwischen der kurzen Stegseite und dem oberen Sockelteil wird so gering gehalten, dass beim Anlegen der kurzen Stegseite im Aufnahmemittel der Förderzinken nicht durch sein Eigengewicht rausfallen kann.

### Bezugszeichenliste

- 1.: Fördertrommel
- 2.: Förderzinken
- 3.: Trommelgrundkörper
- 4.: Sockel
- 5.: Mitnehmerelement
- 6.: Aufnahmemittel
- 7.: Aufnahmefenster
- 8.: obere Sockelteil
- 9.: untere Sockelteil
- 10.: Verriegelungseinrichtung
- 11.: Sechskantwelle
- 12.: Exzenterscheibe
- 13.: lange Stegseite
- 14.: kurze Stegseite

Ein Ausführungsbeispiel der Erfindung ist in der Zeichnung dargestellt und wird nachfolgend beschrieben. In der Zeichnung zeigen:
**Fig.1****:** Eine mit Förderzinken teilbestückte Fördertrommel nach der Erfindung in perspektivischer Ansicht;
**Fig.2****:** Eine Darstellung ähnlich Fig.1, wobei ein Förderzinken teilweise in ein Aufnahmemittel des Trommelgrundkörpers eingesetzt ist;
**Fig.3****:** Eine Fördertrommel mit eingesetzten Förderzinken, wobei sich die Förderzinken im nicht verriegelten Zustand befinden, nach einer Seitenansicht der Fördertrommel nach Fig.1;
**Fig.4****:** Eine Fördertrommel mit eingesetzten Förderzinken, wobei sich die Förderzinken im verriegelten Zustand befinden, nach einer Seitenansicht der Fördertrommel nach Fig.1.

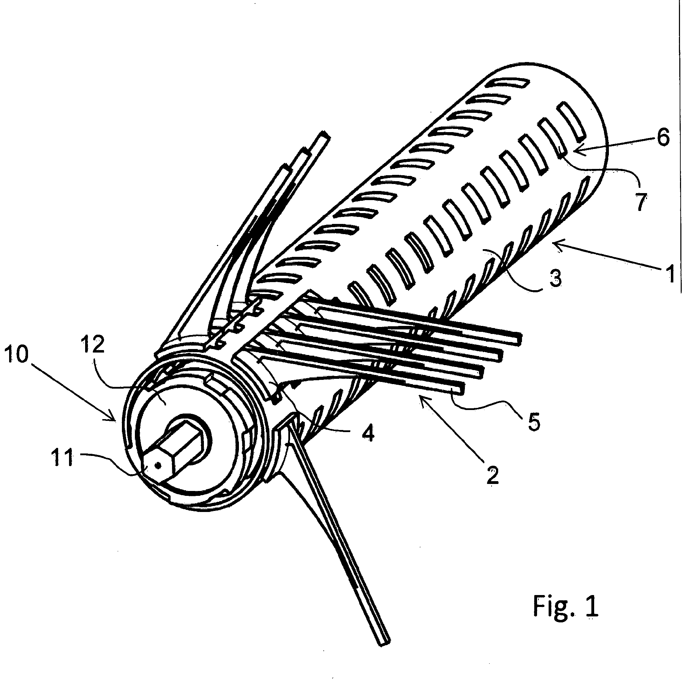

In der **Fig.1** ist eine Fördertrommel 1 dargestellt, die teilweise mit Förderzinken 2 bestückt ist. Die dargestellte Fördertrommel 1 bildet sich aus einem Trommelgrundkörper 3 und den daran befestigten Förderzinken 2.

Die Förderzinken 2 bestehen aus zwei Teilen, und zwar aus einem Sockel 4 und einem Mitnehmerelement 5. Wenn der Sockel 4 aus elastischem Material besteht, kann das Mitnehmerelement 5 aus einem Draht bzw. aus einem Rundstahl sein. Alternativ kann das Mitnehmerelement 5 auch aus elastischem Material bestehen, um so beim Aufnehmen von Erntegut, Fremdkörpern partiell ausweichen zu können. Vorzugsweise besteht der ganze Förderzinken 2 (Sockel 4 mit Mitnehmerelement 5) aus einem elastischen Material. Weiterhin kann das Mitnehmerelement 5 des Förderzinkens 2 einen ungleichmäßigen Querschnitt nach außen (oben) zur Spitze verjüngend aufweisen. Dabei sind quadratförmige oder dreieckförmige Querschnitte denkbar.

Die Förderzinken 2 sind an ihren Sockeln 4 in Aufnahmemittel 6, auch als Aufnahmefenster 7 bezeichnet, eingesetzt. Da in der Zeichnung nicht jedes Aufnahmefenster 7 mit einem Förderzinken 2 bestückt ist, sind die leeren Aufnahmefenster 7 erkennbar. Diese Darstellung wurde aufgrund der Übersichtlichkeit so gewählt. Im Betriebszustand der Fördertrommel 1 sind alle Aufnahmefenster 7 mit Förderzinken 2 bestückt. Im Erntebetrieb ist die rotierende Fördertrommel 1 mit ihren Förderzinken 2 dazu ausgelegt, Halm/- und Blattgut vom Boden aufzunehmen und/oder weiter zu fördern. Beispielsweise ist die Fördertrommel 1 zur Förderung von Erntegut in einem Förderkanal innerhalb der Erntemaschine einsetzbar. Die Fördertrommel 1 bezweckt zum einen die Aufnahme von Erntegut und zum anderen das Weiterfördern von Erntegut.

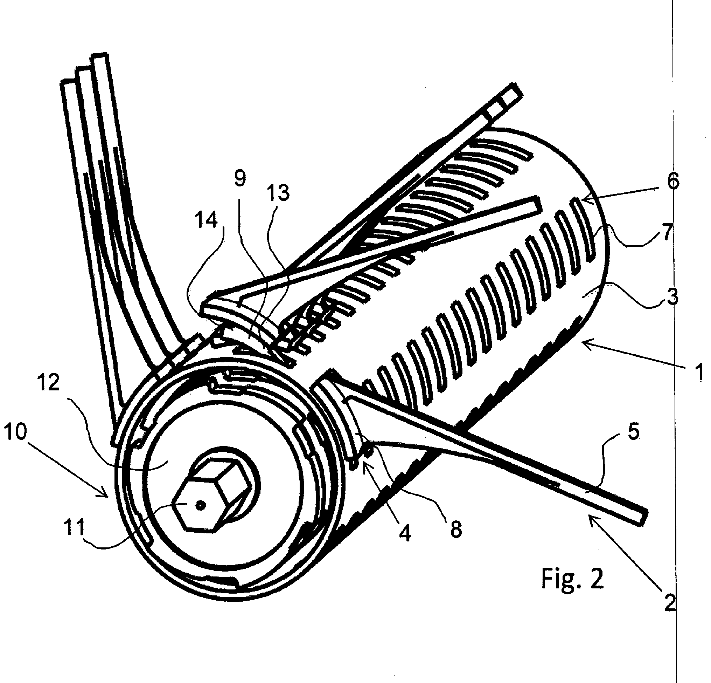

In der **Fig.2** ist eine Fördertrommel 1 ähnlich wie in Fig.1 dargestellt, mit dem Unterschied, dass ein Förderzinken 2 teilweise in ein Aufnahmefenster 7 des Trommelgrundkörpers 3 eingesetzt ist. Der Förderzinken 2 wird an seinem Sockel 4 in ein Aufnahmefenster 7 des Trommelgrundkörpers 3 befestigt. Der Sockel 4 besteht aus einem oberen Sockelteil 8 und einem unterem Sockelteil 9. Die Wölbung der Oberfläche des Sockels 4 des Förderzinkens 2 weist einen Radius auf. Dieser ist an den Radius des Trommelgrundkörpers 3 angepasst. So kann vorzugsweise aus den oberen Sockelteilen 8 der Trommelmantel gebildet werden. Beim Einsetzen der Förderzinken 2 in die Aufnahmefenster 7 stützt sich der obere Sockelteil 8 am Trommelgrundkörper 3 ab. Der untere Sockelteil 9 versinkt dabei im Aufnahmefenster 7. Der untere Sockelteil 9 weist eine lange Stegseite 13 und eine kurze Stegseite 14 auf. Beim Einsetzen des Sockels 4 in ein Aufnahmefenster 7 wird die lange Stegseite 13 des unteren Sockelteils 9 zuerst eingesetzt und hinterher die kurze Stegseite 14.

Eine zentrale Verriegelungseinrichtung 10 arretiert die Förderzinken 2 innerhalb der Fördertrommel 1. Die Verriegelungseinrichtung 10 weist eine Sechskantwelle 11 auf, auf der Exzenterscheiben 12 angebracht sind. Die Exzenterscheiben 12 arretieren die Förderzinken 2 an ihren Sockeln 4. In einer anderen Ausführungsform sind auf der Sechskantwelle 11 Keile, anstatt Exzenterscheiben 12, angebracht. Eine Möglichkeit die Exzenterscheiben 12 auf der Sechskantwelle 11 anzubringen, besteht darin die Exzenterscheiben 12 auf der Sechskantwelle 11 festzuschrauben. Dabei werden die Exzenterscheiben 12 auf die bestimmte Stelle der Sechskantwelle 11 aufgeschoben. Die Exzenterscheiben 12 weisen hierbei ein Feststellgewinde auf, damit die Exzenterscheiben 12 mit Schrauben auf der Sechskantwelle 11 fixiert werden können. Bei einer bevorzugten Variante werden die Exzenterscheiben 12, möglicherweise auch Keile, auf die Sechskantwelle 11 aufgeschweißt. Alternativ zu einer Sechskantwelle 11, kann auch eine Vierkantwelle oder eine runde Welle verwendet werden.

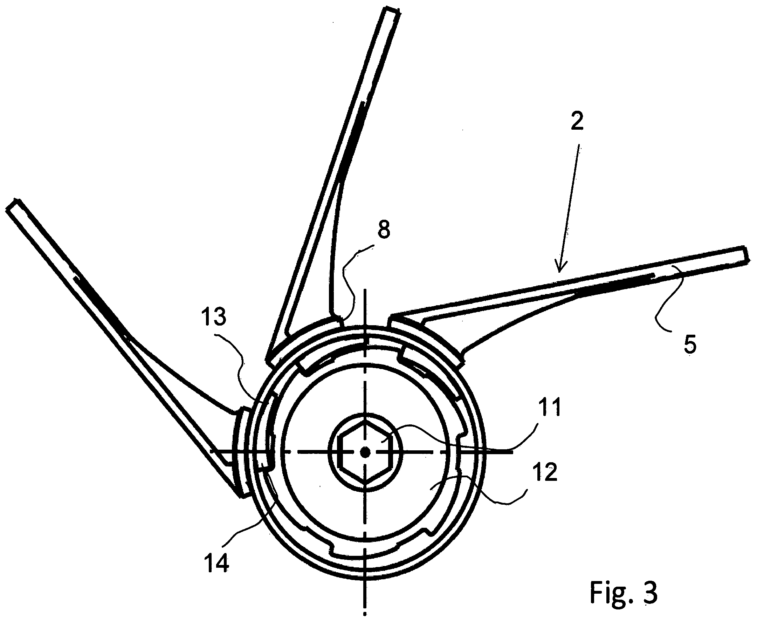

**Fig.3** zeigt eine, teilweise mit Förderzinken 2 besetzte, Fördertrommel 1 als Seitenansicht der Fördertrommel 1 nach Fig.1. Die Förderzinken 2 befinden sich in einem Zustand, in dem sie gerade in die Aufnahmefenster 7 eingeführt sind und noch nicht verriegelt sind. Der obere Sockelteil 8 des Förderzinkens 2 liegt am Trommelgrundkörper 3 an. Im Inneren der Fördertrommel 1 ist die Arretierung noch nicht erfolgt. Die Verriegelungseinrichtung 10 befindet sich hierbei in einer Stellung, wo kein Kontakt zwischen den Anlageflächen der Exzenterscheiben 12 und der der unteren Sockelteile 9 besteht.

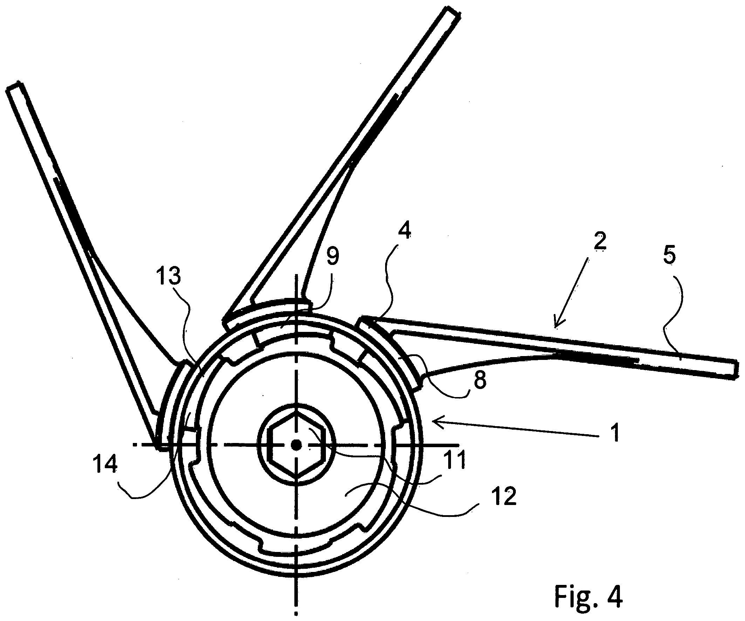

**Fig.4** zeigt eine, teilweise mit Förderzinken 2 besetzte, Fördertrommel 1 als Seitenansicht von Fig.1, wobei sich die Förderzinken 2 im verriegelten Zustand befinden. Dabei wird der Förderzinken 2 nach dem Einsetzten in die Aufnahmefenster 7 in die Richtung der kurzen Stegseite 14 angelegt. Durch das Drehen der Verriegelungseinrichtung 10 nehmen die Anlageflächen der Exzenterscheiben 12 und der der unteren Sockelteile 9 Kontakt auf. Die Exzenterscheiben 12 drücken den unteren Sockelteil 9 gegen die Aufnahmemittel 6 des Trommelgrundkörpers 3 und klemmen somit den Sockel 4 fest. Es entsteht eine reibschlüssige Verbindung. Das eigenständige Entriegeln der Verriegelungseinrichtung 10 wird durch die Verwendung von Verdreh-/ oder Entriegelungssicherungen, die üblicherweise in der mechanischen Technik als Sicherungsmittel bekannt sind, verhindert.

Das Drehen der Verriegelungseinrichtung 10 zum Verriegeln und Entriegeln erfolgt an der Sechskantwelle 11. Die vorteilhaft eingesetzte Sechskantwelle 11 wird mithilfe eines Werkzeugschlüssels in die entsprechende Richtung gedreht. In einer anderen Ausführung kann eine runde Welle verwendet werden, die eine Schlüsselfläche für einen Werkzeugschlüssel aufweist. Weitere Wellenausführungen sind weiterhin denkbar.

Nach einem weiteren Aspekt der Erfindung können die Exzenterscheiben 12 durch übliche runde Scheiben, ohne Exzentern, ausgetauscht werden. Die Scheiben werden ebenfalls auf einer Welle angebracht. Bei dieser Ausführungsform werden auf die Mantelflächen der Scheiben Keile angebracht, die die gleiche Funktion haben, wie Exzenterscheiben 12. Durch das Drehen der Welle erfolgt das Verriegeln und Entriegeln der Förderzinken 2.

## Patentansprüche

1. Erntemaschine mit einer Fördertrommel (1) zur Förderung und/oder Aufnahme von halmförmigen Erntegut, die eine Vielzahl von Förderzinken (2) aufweist und die an einem Trommelgrundkörper (3) der Fördertrommel (1) in quer zur Fahrt-/ und Arbeitsrichtung angeordneten Reihen angebracht sind, wobei die Förderzinken (2) an dem Trommelgrundkörper (3) von außen her mit Aufnahmemitteln (6) des Trommelgrundkörpers (3) verbindbar sind und durch eine zentrale Verriegelungseinrichtung (10) zumindest zwei Förderzinken (2) von der Innenseite des Trommelgrundkörpers (3) gleichzeitig arretierbar sind, wobei die Förderzinken (2) einen Sockel (4) und wenigstens ein aus dem Sockel (4) hervortretendes Mitnehmerelement (5) umfassen, wobei die Verriegelungseinrichtung (10) eine Welle (11) aufweist,
**dadurch gekennzeichnet, dass**
der Sockel (4) des Förderzinkens (2) so gestaltet ist, dass eine formschlüssige Verbindung mit dem Trommelgrundkörper (3) herstellbar ist, wobei auf der Welle (11) Exzenter aufgeschweißt sind, welche dazu eingerichtet sind, durch eine radiale Drehbewegung einen unteren Sockelteil (9) des Förderzinkens (2) gegen die Aufnahmemittel (6) des Trommelgrundkörpers (3) zu drücken, wobei eine reibschlüssige Verbindung zwischen dem Sockelteil (9) und dem Exzenter entsteht.

2. Erntemaschine nach Anspruch 1, **dadurch gekennzeichnet, dass** die einzelnen Förderzinken (2) zueinander so versetzt angeordnet sind, dass sie quer zur Fahrtrichtung zumindest bereichsweise eine wendeiförmige Anordnung an dem Trommelgrundkörper (3) ausbilden.

3. Erntemaschine nach Anspruch 1, **dadurch gekennzeichnet, dass** die Förderzinken (2) an dem Trommelgrundkörper (3) quer zur Fahrtrichtung in einer linearen Reihe ausgerichtet sind.

4. Erntemaschine nach einem der vorherigen Ansprüche, **dadurch gekennzeichnet, dass** der Sockel (4) des Förderzinkens (2) so geformt ist, dass die Öffnungen der Aufnahmemittel (6) des Trommelgrundkörpers (3) zumindest in etwa abgedeckt sind.

5. Erntemaschine nach Anspruch 4, **dadurch gekennzeichnet, dass** nach der Montage der Förderzinken (2) an dem Trommelgrundkörper (3) nach außen ein geschlossener Trommelmantel gebildet wird.

6. Erntemaschine nach den Ansprüchen 4 bis 5, **dadurch gekennzeichnet, dass** der Sockel (4) des Förderzinkens (2) aus einem oberen Sockelteil (8) und dem unteren Sockelteil (9) gebildet wird.

7. Erntemaschine nach den Ansprüchen 4 bis 6, **dadurch gekennzeichnet, dass** der untere Sockelteil (9) des Förderzinkens (2) so gestaltet ist, dass dieser sich durch die Aufnahmemittel (6) des Trommelgrundkörpers (3) erstreckt und im Innern des Trommelgrundkörpers (3) eine Anlagefläche bildet.

8. Erntemaschine nach dem Anspruch 7, **dadurch gekennzeichnet, dass** der untere Sockelteil (9) des Förderzinkens (2) eine kurze Stegseite (14) und eine lange Stegseite (13) aufweist.

9. Erntemaschine nach Anspruch 1, **dadurch gekennzeichnet, dass** die Verriegelungseinrichtung (10) eine weitere Sicherung aufweist, die nach dem Lösen der Verriegelungseinrichtung (10) ein unbeabsichtigtes Herausfallen der Förderzinken (2) aus den Aufnahmemitteln (6) des Trommelgrundkörpers (3) verhindert.

## Claims

1. Harvester comprising a conveyor drum (1) for conveying and/or picking up stalk-like harvested crop, which drum has a large number of conveyor tines (2) which are attached to a drum main body (3) of the conveyor drum (1) in rows arranged transversely to the travel and working direction, it being possible for the conveyor tines (2) on the drum main body (3) to be connected from the outside to receiving means (6) of the drum main body (3) and it being possible for at least two conveyor tines (2) to be locked from the inside of the drum main body (3) at the same time by means of a central locking device (10), the conveyor tines (2) comprising a base (4) and at least one driver element (5) protruding from the base (4), the locking device (10) having a shaft (11),
**characterised in that**
the base (4) of the conveyor tine (2) is designed in such a way that a form-fitting connection can be established with the drum main body (3), with eccentrics being welded onto the shaft (11), which eccentrics are designed to press a lower base part (9) of the conveyor tine (2) against the receiving means (6) of the drum main body (3) by means of a radial rotary movement, with a frictional connection being created between the base part (9) and the eccentric.

2. Harvester according to claim 1, **characterised in that** the individual conveyor tines (2) are arranged so as to be offset from one another in such a way that they form a helical arrangement on the drum main body (3), at least in regions, transversely to the travel direction.

3. Harvester according to claim 1, **characterised in that** the conveyor tines (2) on the drum main body (3) are aligned in a linear row transversely to the travel direction.

4. Harvester according to any of the preceding claims, **characterised in that** the base (4) of the conveyor tine (2) is shaped in such a way that the openings of the receiving means (6) of the drum main body (3) are at least approximately covered.

5. Harvester according to claim 4, **characterised in that**, after the conveyor tines (2) have been mounted on the drum main body (3), a closed drum casing is formed on the outside.

6. Harvester according to claims 4 to 5, **characterised in that** the base (4) of the conveyor tine (2) is formed from an upper base part (8) and the lower base part (9).

7. Harvester according to claims 4 to 6, **characterised in that** the lower base part (9) of the conveyor tine (2) is designed in such a way that it extends through the receiving means (6) of the drum main body (3) and forms a contact surface inside the drum main body (3).

8. Harvester according to claim 7, **characterised in that** the lower base part (9) of the conveyor tine (2) has a short connection piece side (14) and a long connection piece side (13).

9. Harvester according to claim 1, **characterised in that** the locking device (10) has a further safety device which, after the locking device (10) has been released, prevents the conveying tines (2) from accidentally falling out of the receiving means (6) of the drum main body (3).

## Revendications

1. Moissonneuse comportant un tambour de transfert (1) pour transférer et/ou prendre des produits en tige récoltés, un ensemble de dents de transfert (2) et qui sont montés sur un corps de base (3) du tambour de transfert (1) dans des rangées transversales à la direction de déplacement de travail,
- les dents de transfert (2) étant reliées au corps de base (3) par l'extérieur, avec les moyens récepteurs (6) du corps de base (3) du tambour et en même temps elles sont bloquées par une installation de verrouillage centrale (10) bloquant au moins deux dents de transfert (2), en même temps par le côté intérieur du corps de base (3),
- les dents de transfert (2) ayant un socle (4) et au moins un élément d'entraînement (5) en relief du socle (4),
- l'installation de verrouillage (10) comprenant un arbre (11), moissonneuse **caractérisée en ce que**
- le socle (4) de la dent de transfert (2) est formé pour réaliser une liaison par la forme avec le corps de base (3) du tambour,
- des excentriques étant soudés sur l'arbre (11) et conçus pour pousser la partie inférieure (9) du socle de la dent de transfert (2) par un mouvement de rotation radialement contre le moyen récepteur (6) du corps de base (3),
en réalisant une liaison par frottement entre la partie de socle (9) et l'excentrique.

2. Moissonneuse selon la revendication 1,
**caractérisée en ce que**
les différentes dents de transfert (2) sont décalées les unes par rapport aux autres pour développer transversalement à la direction de déplacement, par zones, une disposition en forme d'hélice sur le corps de base (3) du tambour.

3. Moissonneuse selon la revendication 1,
**caractérisée en ce que**
les dents de transfert (2) sont orientées selon une rangée linéaire sur le corps de base (3) du tambour, transversalement à la direction de circulation.

4. Moissonneuse selon l'une des revendications précédentes,
**caractérisée en ce que**
le socle (4) de la dent de transfert (2) est formé pour couvrir au moins sensiblement les ouvertures des moyens récepteurs (6) du corps de base (3) du tambour.

5. Moissonneuse selon la revendication 4,
**caractérisée en ce que**
après le montage des dents de transfert (2) sur le corps de base (3) du tambour, on a une enveloppe de tambour fermée vers l'extérieur.

6. Moissonneuse selon les revendications 4 à 5,
**caractérisée en ce que**
le socle (4) de la dent de transfert (2) est formé d'une partie supérieure de socle (8) et de la partie inférieure de socle (9).

7. Moissonneuse selon les revendications 4 à 6,
**caractérisée en ce que**
la partie inférieure (9) du socle de la dent de transfert (2) est formée pour traverser le moyen récepteur (6) du corps de base (3) du tambour et former une surface d'appui à l'intérieur du corps de base (3) du tambour.

8. Moissonneuse selon la revendication 7,
**caractérisée en ce que**
la partie inférieure (9) du socle de la dent de transfert (2) a un côté d'arête court (14) et un côté d'arête long (13).

9. Moissonneuse selon la revendication 1,
**caractérisée en ce que**
l'installation de verrouillage (10) comporte une autre sécurité qui, après libération de l'installation de verrouillage (10), évite que les dents de transfert (2) ne tombent accidentellement des moyens récepteurs (6) du corps de base (3) du tambour.
